# EUROPÄISCHE PATENTSCHRIFT

(11) **EP 3 701 779 B1**
(45) Veröffentlichungstag und Bekanntmachung des Hinweises auf die Patenterteilung: **01.02.2023**
(21) Anmeldenummer: 19209640.2
(22) Anmeldetag: 18.11.2019
(51) Int. Cl.: A01B 63/112, A01B 63/111

(54) **LANDWIRTSCHAFTLICHE ARBEITSMASCHINE UND VERFAHREN ZUM BETREIBEN EINER LANDWIRTSCHAFTLICHEN ARBEITSMASCHINE**
AGRICULTURAL MACHINE AND METHOD FOR OPERATING AN AGRICULTURAL MACHINE
MACHINE AGRICOLE ET PROCÉDÉ DE FONCTIONNEMENT D'UNE MACHINE AGRICOLE

(30) Priorität: 28.02.2019 DE 102019105052
(43) Veröffentlichungstag der Anmeldung: 02.09.2020
(73) Patentinhaber: CLAAS Tractor S.A.S., 78141 Vélizy-Villacoublay Cedex (FR)
(72) Erfinder: Kaster, Craig, OMAHA, NE 68138 (US); Poret, Jérôme, 50720 Barenton (FR); Becker, Thomas, 75015 Paris (FR)
(74) Vertreter: CLAAS Gruppe

(56) Entgegenhaltungen:
- EP-A1- 3 050 416
- EP-A2- 2 546 627
- WO-A1-2018/074213
- CN-A- 109 121 510
- US-A- 4 518 044
- US-A- 4 582 141
- US-A- 5 684 691
- US-A1- 2017 215 327
- US-B2- 8 909 440

## Beschreibung

Die vorliegende Erfindung betrifft eine landwirtschaftliche Arbeitsmaschine gemäß dem Oberbegriff des Anspruches 1. Weiterhin betrifft die Erfindung ein Verfahren zum Betreiben einer landwirtschaftlichen Arbeitsmaschine gemäß dem Oberbegriff des Anspruches 10.

Eine landwirtschaftliche Arbeitsmaschine, insbesondere ein Traktor, ist mit an zumindest einer angetriebenen Achse angeordneten Bodeneingriffsmitteln zur Übertragung eines Drehmoments ausgeführt. Die Bodeneingriffsmittel können insbesondere als Räder oder als eine Kombination aus Rädern und Raupenfahrwerk ausgebildet sein. Weiterhin umfasst die Arbeitsmaschine zumindest eine Anschlussvorrichtung, an welche ein von der Arbeitsmaschine betriebenes Anbaugerät angeschlossen ist, dessen Arbeitsposition höhenverstellbar ist. Die Anschlussvorrichtung kann als eine Anhängekupplung oder als ein Dreipunkt-Kraftheber ausgebildet sein, die insbesondere hydraulisch in der Höhe verstellbar ist.

Das Betreiben der landwirtschaftlichen Arbeitsmaschine mit einem an die Anschlussvorrichtung angeschlossenen Anbaugerät, insbesondere einem Bodenbearbeitungsgerät, wie beispielsweise einem Pflug, einem Tiefen lockerer oder einem Grubber, erfordert von der Bedienperson der Arbeitsmaschine eine hohe Aufmerksamkeit beim Führen der Arbeitsmaschine auf dem zu bearbeitenden Feld.

Aus der EP 3 050 416 A1 ist ein Bodenbearbeitungsgerät bekannt, welches an einer höhenverstellbaren Anschlussvorrichtung einer als Schlepper ausgeführten landwirtschaftlichen Arbeitsmaschine angeschlossen wird. Das Bodenbearbeitungsgerät verfügt über ein Fahrwerk zum Abstützen am Boden. Die Bodeneingriffstiefe des Bodenbearbeitungsgerät wird durch am Fahrwerk vorgesehene Höhenverstellmittel sowie die höhenverstellbare Anschlussvorrichtung eingestellt. Eine Tiefensteuervorrichtung steuert automatisch die Höhenverstellmittel sowie die Anschlussvorrichtung in Abhängigkeit von einem Radschlupf am Fahrwerk und einer vom Schlepper auf das Bodenbearbeitungsgerät ausgeübten Zugkraft an. Mit dem Überschreiten eines Schwellwertes des Radschlupfes sowie der ausgeübten Zugkraft wird die Bodeneingriffstiefe des Bodenarbeitsgerätes verringert. Dies geschieht vor dem Hintergrund, das Bodenbearbeitungsgerät mit kleineren und leichteren Schleppern zu fahren, wobei übermäßiger Schlupf reduziert und der Vorgewendeanschnitt verbessert werden sollen.

Eine landwirtschaftliche Arbeitsmaschine sowie ein Verfahren zum Betreiben einer landwirtschaftlichen Arbeitsmaschine der eingangs genannten Art ist aus der US 4, 518,044 A sowie der 4,582,414 A bekannt.

Ausgehend vom vorstehend genannten Stand der Technik liegt der vorliegenden Erfindung die Aufgabe zugrunde, eine landwirtschaftliche Arbeitsmaschine sowie ein Verfahren zum Betreiben einer landwirtschaftlichen Arbeitsmaschine bereitzustellen, welche einen effizienteren Betrieb bei der Durchführung der Bodenbearbeitung von Feldern ermöglichen.

Diese Aufgabe wird erfindungsgemäß durch eine landwirtschaftliche Arbeitsmaschine gemäß dem Anspruch 1 gelöst. Verfahrenstechnisch wird diese Aufgabe durch ein Verfahren zum Betreiben einer landwirtschaftlichen Arbeitsmaschine gemäß dem nebengeordneten Anspruch 10 gelöst.

Vorteilhafte Weiterbildungen sind Gegenstand der jeweiligen Unteransprüche.

Gemäß dem Anspruch 1 wird zur Lösung der Aufgabe eine landwirtschaftliche Arbeitsmaschine mit an zumindest einer angetriebenen Achse angeordneten Bodeneingriffsmitteln zur Übertragung eines Drehmoments sowie zumindest einer Anschlussvorrichtung, an welche ein von der Arbeitsmaschine betriebenes Anbaugerät angeschlossen ist, dessen Arbeitsposition höhenverstellbar ist, vorgeschlagen. Bei der landwirtschaftlichen Arbeitsmaschine kann es sich insbesondere um einen Traktor handeln. Für einen effizienteren Betrieb bei der Durchführung einer Bodenbearbeitung von Feldern ist erfindungsgemäß vorgesehen, dass durch eine Veränderung mindestens eines Betriebsparameters des Anbaugerätes eine von dem Anbaugerät auf die Arbeitsmaschine ausgeübte Zugkraft in Abhängigkeit von mindestens einem Maschinenparameter der Arbeitsmaschine derart steuer- oder regelbar ist, dass mindestens der eine Maschinenparameter in einem vorgebbaren Bereich liegt. Die von dem Anbaugerät auf die Arbeitsmaschine ausgeübte Zugkraft resultiert dabei aus der Art und Größe des Anbaugerätes, gegebenenfalls dessen Leistungsaufnahme, wenn das Anbaugerät für dessen Betrieb aktiv angetrieben werden muss, sowie der jeweils vorherrschenden Bodenbeschaffenheit. Letztere kann innerhalb eines Feldes stark variieren. Durch die automatische Regelung der ausgehend von dem Anbaugerät auf die Arbeitsmaschine wirkenden Zugkraft kann die Arbeitsmaschine in einem optimalen Betriebsbereich betrieben werden, wodurch die Traktion verbessert und ein effizienterer Betrieb der Arbeitsmaschine ermöglicht wird. Unter der von dem Anbaugerät auf die Arbeitsmaschine wirkenden Zugkraft ist die Widerstandskraft zu verstehen, die das gezogene Anbaugerät aufgrund seiner eingestellten Betriebsparameter und der Bodenbeschaffenheit hervorruft.

Hierzu kann die Steuerung oder Regelung des mindestens einen Betriebsparameters des Anbaugerätes in Abhängigkeit von an den Bodeneingriffsmitteln der Arbeitsmaschine auftretendem Schlupf erfolgen. Der Schlupf stellt einen Maschinenparameter der Arbeitsmaschine dar, der in einem vorgebbaren Bereich liegen soll. Um den Schlupf in diesem vorgebbaren Bereich zu halten, wird die von dem Anbaugerät während der Bodenbearbeitung ausgeübte Zugkraft verändert, indem mindestens ein Betriebsparameter des Anbaugerätes entsprechend variiert wird, um die Zugkraft zu erhöhen oder abzusenken, damit der Betriebsparameter Schlupf im vorgegebenen Bereich gehalten wird.

Weiterhin kann die Steuerung oder Regelung des mindestens einen Betriebsparameters in Abhängigkeit von einem auf zumindest eines der Bodeneingriffsmittel übertragenen Drehmoment erfolgen.

Insbesondere kann der mindestens eine Betriebsparameter des Anbaugerätes eine Bodeneingriffstiefe sein. Die Bodeneingriffstiefe des Anbaugerätes bestimmt maßgeblich die Zugkraft respektive Widerstandskraft, welche von dem Anbaugerät auf die Arbeitsmaschine ausgeübt wird. Insbesondere bei einer Ausgestaltung des Anbaugerätes als ein Bodenbearbeitungsgerät ist dies der Fall. Dabei hat die Bodenbeschaffenheit einen besonderen Einfluss auf die Größenordnung der ausgeübten Zugkraft. Je nach Bodenbeschaffenheit, ob beispielsweise ein schwerer oder lockerer Boden bearbeitet wird, führt diese zu einer sich verändernden Zugkraft respektive Widerstandskraft, die von dem Anbaugerät auf die Arbeitsmaschine ausgeübt wird. Zur Änderung der Zugkraft kann entsprechend eine vertikale Verlagerung einer Zugkupplung des Anbaugerätes und/oder eine zumindest teilweise vertikale Verlagerung des Anbaugerätes erfolgen. Diese Form der Änderung der Zugkraft kann auch bei Anbaugeräten angewendet werden, welche nicht als Bodenbearbeitungsgeräte ausgebildet sind.

Hierzu ist vorgesehen, dass zumindest ein Sensor zur Bestimmung des mindestens einen Maschinenparameters an der Arbeitsmaschine angeordnet ist sowie dass der Arbeitsmaschine zumindest ein Sensor zur Bestimmung des mindestens einen Betriebsparameters des Anbaugerätes zugeordnet ist.

Dabei kann zumindest ein Sensor zur Bestimmung des auf zumindest eines der Bodeneingriffsmittel übertragenen Drehmomentes und/oder der auf die Arbeitsmaschine ausgeübten Zugkraft an der Arbeitsmaschine angeordnet sein. Der mindestens eine Maschinenparameter Drehmoment und/oder Zugkraft kann dabei beispielsweise durch aktive magnetostriktive Drehmomentsensoren erfasst werden, die an der zumindest einen angetriebenen Achse der Arbeitsmaschine angeordnet sind.

Weiterhin kann der Arbeitsmaschine zumindest ein Sensor zur Bestimmung der Arbeitsposition des Anbaugerät zugeordnet sein. Der zumindest eine Sensor kann an der Anschlussvorrichtung der Arbeitsmaschine oder an dem Anbaugerät angeordnet sein.

Insbesondere können der mindestens eine Maschinenparameter der Arbeitsmaschine die Traktion der Bodeneingriffsmittel und/oder die Antriebsleistung der Arbeitsmaschine sein.

Des Weiteren kann der mindestens eine Maschinenparameter der Arbeitsmaschine eine Fahrgeschwindigkeit sein. Um eine vorgebbare Fahrgeschwindigkeit der Arbeitsmaschine insbesondere bei der Bearbeitung eines Bodens mit dem Anbaugerät einzuhalten, wird der mindestens eine Betriebsparameter des Anbaugerätes, insbesondere die Bodeneingriffstiefe, angepasst.

Die Arbeitsmaschine umfasst ein Steuergerät zur Vorgabe des mindestens einen Maschinenparameters der Arbeitsmaschine. Dabei kann das Steuergerät zur Bestimmung des mindestens einen Betriebsparameter des Anbaugerätes eingerichtet sein. Darüber hinaus kann das Steuergerät zur Ansteuerung der höhenverstellbaren Anschlussvorrichtung eingerichtet sein.

Dabei kann das Steuergerät zur manuellen Vorgabe des mindestens einen Maschinenparameters der Arbeitsmaschine eingerichtet sein. Einer Bedienperson ist es somit möglich, den zumindest einen Maschinenparameter bzw. einen Bereich innerhalb dessen der zumindest eine Maschinenparameter liegen soll, vorzugeben.

Das Steuergerät ist zur automatischen Vorgabe des mindestens einen Maschinenparameters der Arbeitsmaschine eingerichtet. Hierzu werden in dem Steuergerät hinterlegte georeferenzierte Daten zur Bestimmung des Sollwertes des mindestens einen Maschinenparameters herangezogen werden, welche auf Informationen basieren, die beispielsweise bei einer vormaligen Bearbeitung des Feldbodens aufgezeichnet wurden.

Hierzu kann beispielsweise anhand von Motorkennlinien, die in dem Steuergerät hinterlegt sind, der mindestens eine Maschinenparameter der Arbeitsmaschine automatisch vorgegeben werden.

Weiterhin wird die eingangs gestellte Aufgabe durch ein Verfahren zum Betreiben einer landwirtschaftlichen Arbeitsmaschine gemäß dem unabhängigen Anspruch 10 gelöst.

Gemäß dem Anspruch 10 wird ein Verfahren zum Betreiben einer landwirtschaftlichen Arbeitsmaschine mit an zumindest einer angetriebenen Achse angeordneten Bodeneingriffsmitteln zur Übertragung eines Drehmoments sowie zumindest einer Anschlussvorrichtung, an welche ein von der Arbeitsmaschine betriebenes Anbaugerät angeschlossen wird, dessen Arbeitsposition durch die Anschlussvorrichtung höhenverstellt wird, vorgeschlagen, wobei durch eine Veränderung mindestens eines Betriebsparameters des Anbaugerätes eine von dem Anbaugerät auf die Arbeitsmaschine ausgeübte Zugkraft in Abhängigkeit von mindestens einem Maschinenparameter der Arbeitsmaschine derart gesteuert- oder geregelt wird, dass mindestens der eine Maschinenparameter in einem vorgebbaren Bereich liegt. Hierdurch wird eine automatische Regelung der auf die Arbeitsmaschine wirkenden Zugkraft erreicht, damit diese in einem optimalen Betriebsbereich betrieben werden kann, wodurch die Traktion verbessert und ein effizienterer Betrieb der Arbeitsmaschine ermöglicht wird.

Dabei kann die von dem Anbaugerät auf die Arbeitsmaschine ausgeübte Zugkraft durch zumindest einen an der Arbeitsmaschine angeordneten Sensor bestimmt werden.

Insbesondere kann die Anschlussvorrichtung angesteuert werden, um eine Bodeneingriffstiefe des Anbaugerät zu verändern, um mindestens den einen Maschinenparameter der Arbeitsmaschine in dem vorgegebenen Bereich zu halten.

Die vorliegende Erfindung wird nachstehend anhand eines in den Zeichnungen dargestellten Ausführungsbeispieles näher erläutert.

Es zeigen:
- Fig. 1: schematisch eine landwirtschaftliche Arbeitsmaschine mit einem daran angeschlossenen Anbaugerät;
- Fig. 2: ein Ablaufdiagramm.

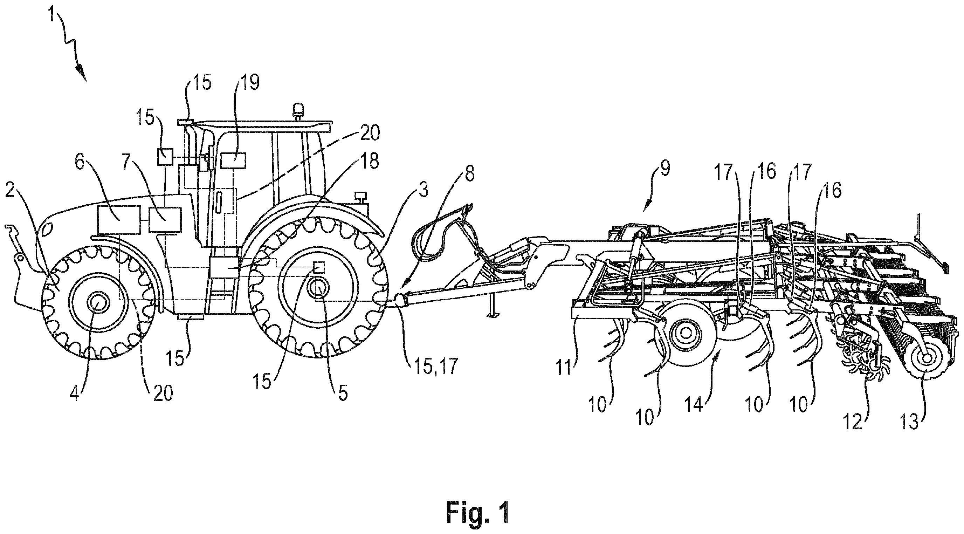

In Fig. 1 ist schematisch eine landwirtschaftliche Arbeitsmaschine 1 mit einem daran angeschlossen Anbaugerät 7 dargestellt. Die landwirtschaftliche Arbeitsmaschine 1 ist im dargestellten Ausführungsbeispiel als ein Traktor ausgeführt. Die Arbeitsmaschine 1 ist mit einem Antriebsmotor 6, einem Getriebe 7 und einem Fahrwerk ausgestattet. Davon sind in der Ansicht gemäß Fig. 1 nur ein vorderes und ein hinteres Bodeneingriffsmittel dargestellt, die als ein Vorderrad 2 und ein Hinterrad 3 ausgeführt sind. Die Vorderräder 2 sind jeweils an einer dazwischenliegenden Vorderachse 4 und die Hinterräder 3 sind jeweils an einer dazwischenliegenden Hinterachse 5 angebaut. Die Arbeitsmaschine 1 ist zumindest über die Hinterräder 3 antreibbar. Zu diesem Zweck weist die Arbeitsmaschine 1 einen Antriebsstrang auf, mit dem eine Antriebsverbindung von dem Antriebsmotor 6 über die Hinterachse 5 zu den Hinterrädern 3 herstellbar ist.

Die Vorderräder 2 und die Hinterräder 3 sind Teil des Fahrwerks und stellen den Kontakt der Arbeitsmaschine 1 gegenüber dem Boden her. Die Gesamtmasse der Arbeitsmaschine 1 stützt sich demnach ausschließlich über die Vorderräder 2 und die Hinterräder 3 auf dem Boden ab. Dabei wirken an sämtlichen Bodeneingriffsmitteln 2, 3 der Arbeitsmaschine 1 in vertikaler Richtung Kräfte, die als Radlast bezeichnet werden. Diese Kräfte resultieren aus dem Eigengewicht der Arbeitsmaschine 1, einer Anbringung eines Anbaugerätes 9 sowie einer gegebenenfalls erforderlich werdenden Ballastierung. An den angetriebenen Hinterrädern 3 der Arbeitsmaschine 1 wirken im Antriebszustand zusätzlich in horizontaler Richtung wirkende, als Triebkräfte bezeichnete Kräfte beziehungsweise im Bremszustand Bremskräfte, sowie Antriebsmomente beziehungsweise im Bremszustand Bremsmomente. Weiterhin treten Stützkräfte auf, die von dem an der Arbeitsmaschine 1 angebrachten Anbaugerät 9 eingebracht werden. Das Anbaugerät 9 ist als Bodenbearbeitungsgerät ausgeführt. Im dargestellten Ausführungsbeispiel ist das Anbaugerät 9 als ein Grubber ausgebildet. Das als Bodenbearbeitungsgerät ausgeführte Anbaugerät 9 kann unter anderem auch als ein Pflug oder eine Egge ausgebildet sein.

Das Anbaugerät 9 ist durch eine, insbesondere heckseitige, Anschlussvorrichtung 8 an die Arbeitsmaschine 1 angeschlossen. Dabei kann die Anschlussvorrichtung 8 beispielsweise als eine Zugdeichsel, eine Anhängerkupplung, ein Hubwerk, eine Dreipunktanlenkung oder dergleichen ausgeführt sein. Mittels der Anschlussvorrichtung 8 ist das Anbaugerät 9 mit der Arbeitsmaschine 1 in der Weise verbindbar, dass das Anbaugerät 9 in Fahrrichtung der Arbeitsmaschine 1 gezogen wird. Das als Grubber ausgeführte Anbaugerät 9 weist an einem Rahmen 11 nebeneinander angeordnete Grubberschare 10 auf. Die Grubberschare 10 dringen in den Feldboden ein, um diesen aufzulockern. Die Anordnung der Grubberschare 10 an dem Rahmen 11 kann ein oder mehrreihig erfolgen. Der letzten Reihe Grubberschare 10 nachgeordnet sind Sternverteiler 12 oder Einebnungsscheiben zur Einebnung des zuvor aufgelockerten Feldbodens sowie eine Nachlaufwalze 13, welche der Rückverfestigung und Krümelung dient.

Weiterhin ist die Arbeitsposition des Anbaugerätes 9, d.h. die Bodeneindringtiefe der Grubberschare 10 in den Feldboden, mittelbar oder unmittelbar höhenverstellbar. Eine unmittelbare Höhenverstellung des Anbaugerätes 9 zur Veränderung der Arbeitsposition des Anbaugerätes 9 ist beispielsweise durch eine Ansteuerung eines Fahrwerks 14 des Anbaugerätes 9 realisierbar. Weiterhin können die Grubberschare 10 durch eine Ansteuerung einer der jeweiligen Grubberschar 10 zugeordneten Aktor 16, die insbesondere als Hydraulikzylinder ausgeführt ist, individuell und/oder reihenweise in ihrer Bodeneingriffstiefe verändert werden. Eine mittelbare Höhenverstellung des Anbaugerätes 9 lässt sich durch eine Ansteuerung der Anschlussvorrichtung 8 bewirken.

Die Bearbeitung von Feldböden unterschiedlicher Bodenart, wie Sand, Schluff, Ton oder Lehm, kann je nach Bodenart dazu führen, dass an den Vorderrädern 2 und/oder Hinterrädern 3 Schlupf in einer Größenordnung auftritt, der eine unzureichende Übertragung der Antriebskraft auf den Feldboden zur Folge hat. Die Effizienz des Antriebsmotors 6 der landwirtschaftlichen Arbeitsmaschine 1 sinkt dadurch stark ab. Zudem wird das erreichbare Arbeitsergebnis bei der Bodenbearbeitung negativ beeinflusst. Ein wesentlicher Faktor, der das Auftreten und die Größenordnung von Schlupf an den Vorderrädern 2 und/oder Hinterrädern 3 beeinflusst, ist die durch das Anbaugerät 9 auf die Arbeitsmaschine ausgeübte Zugkraft.

Um das Auftreten von übermäßigem Schlupf zu vermeiden und insbesondere einen effizienteren Betrieb der landwirtschaftlichen Arbeitsmaschine 1 zu ermöglichen, ist es vorgesehen, dass durch eine Veränderung mindestens eines Betriebsparameters des Anbaugerätes 9 eine von dem Anbaugerät 9 auf die Arbeitsmaschine 1 ausgeübte Zugkraft in Abhängigkeit von mindestens einem Maschinenparameter der Arbeitsmaschine 1 derart steuer- oder regelbar ist, dass mindestens der eine Maschinenparameter in einem vorgebbaren Bereich liegt.

Als ein oder mehrere Maschinenparameter der Arbeitsmaschine 1 können ein Drehmoment, der Schlupf an den Bodeneingriffsmitteln, die Fahrgeschwindigkeit, die vom Antriebsmotor bereitgestellte Antriebsleistung herangezogen werden.

Ein Betriebsparameter des Anbaugerätes 9 kann insbesondere die Bodeneindringtiefe sein.

Hierzu ist zumindest ein Sensor 15 zur Bestimmung des mindestens einen Maschinenparameters an der Arbeitsmaschine 1 angeordnet. Weiterhin ist der Arbeitsmaschine 1 zumindest ein Sensor 17 zur Bestimmung des mindestens einen Betriebsparameters des Anbaugerätes 9 zugeordnet. Der zumindest eine Sensor 17 kann hierzu unmittelbar an der Arbeitsmaschine 1 und/oder an dem Anbaugerät 9 angeordnet sein.

An der Arbeitsmaschine 1 können ein oder mehrere Sensoren 15 angeordnet sein, welche der Erfassung von Parametern dienen, die zur Bestimmung des mindestens einen Maschinenparameters verwendet werden. Die von dem oder den an der Arbeitsmaschine 1 angeordneten Sensoren 15 bereitgestellten Signale werden von einem Steuergerät 18 zur Bestimmung eines aktuellen Istwertes des mindestens einen Maschinenparameters ausgewertet. In Abhängigkeit von dem Istwert des mindestens einen Maschinenparameter der Arbeitsmaschine 1 steuert oder regelt das Steuergerät 18 den mindestens einen Betriebsparameter des Anbaugerätes 9. Die Übertragung der Signale der Sensoren 15 erfolgt bevorzugt mittels eines Bussystems 20 der Arbeitsmaschine 1. Über das Bussystem 20 sind zudem Steuersignale an den Antriebsmotor 6, das Getriebe 7 sowie die Anschlussvorrichtung 8 übermittelbar. Mit dem der Arbeitsmaschine 1 zugeordneten zumindest einen Sensor 17 zur Bestimmung des mindestens einen Betriebsparameters des Anbaugerätes 9 kann das Steuergerät 18 ebenfalls über ein Bussystem in Verbindung stehen, beispielsweise das ISO-Bussystem. Alternative Kommunikationswege für den Empfang von Signalen der Sensoren 17 sind ebenfalls denkbar. Beispielsweise können die Sensoren drahtlos mit dem Steuergerät 18 kommunizieren.

Das Steuergerät 18 ist signaltechnisch mit einer Ein- und Ausgabevorrichtung 19 verbunden. Die Ein- und Ausgabevorrichtung 19 dient unter anderem dazu, einer Bedienperson einen Sollwert des mindestens einen Maschinenparameters sowie den korrespondierenden aktuellen Istwert anzuzeigen. Der Sollwert ist dabei nicht als ein einzelner Wert zu verstehen, sondern kann einen Wertebereich umfassen. Die Bestimmung des Sollwertes des mindestens einen Maschinenparameters kann automatisch durch das Steuergerät 18 durchgeführt werden. Hierzu sind in dem Steuergerät 18 hinterlegte, georeferenzierte Daten zur Bestimmung des Sollwertes des mindestens einen Maschinenparameters herangezogen, welche auf Informationen basieren, die bei einer vormaligen Bearbeitung des Feldbodens aufgezeichnet wurden. Zudem können die Art und der Typ des Anbaugerätes 9 berücksichtigt werden. Alternativ oder zusätzlich kann der einzuhaltende Sollwert des mindestens einen Maschinenparameters mittels der Ein- und Ausgabevorrichtung 19 von der Bedienperson manuell vorgegeben werden. Als ein Sensor 15 kann ein Positionsortungssensor beispielsweise am Kabinendach der Arbeitsmaschine 1 angeordnet sein.

Der Sensor 15 kann weiterhin als ein Radarsensor ausgeführt sein. Wie in dem dargestellten Ausführungsbeispiel angedeutet, kann der als Radarsensor ausgeführte Sensor 15 auf der dem Feldboden zugewandten Unterseite der Arbeitsmaschine 1 angeordnet sein. Mittels des Radarsensors lässt sich eine aktuelle Fahrgeschwindigkeit der Arbeitsmaschine 1 bestimmen. Ebenfalls könnte ein als Bodenradarsensor ausgeführter Sensor 15 an der Arbeitsmaschine 1 angeordnet sein, welcher die jeweilige Bodenbeschaffenheit des zu bearbeitenden Feldbodens detektieren kann.

Weiterhin kann der Sensor 15 als Drehzahlsensor ausgeführt sein, welcher ein vom Antriebsmotor 6 abgegebene Drehzahl erfasst und in Verbindung mit einer vorgenommenen Gangauswahl am Getriebe 7 eine Bestimmung der theoretischen Fahrgeschwindigkeit der Arbeitsmaschine 1 als ermöglicht.

Des Weiteren kann der Sensor 15 als aktiver magnetostriktiver Drehmomentsensor ausgeführt sein, welcher an der zumindest einen angetriebenen Achse 4, 5, hier der Hinterachse 5, der Arbeitsmaschine 1 angeordnet ist. Mittels des als magnetostriktivem Drehmomentsensor ausgeführten Sensors 15 lässt sich ein Drehmoment als Maschinenparameter der Arbeitsmaschine 1 erfassen bzw. bestimmen.

An der Anschlussvorrichtung 8 der Arbeitsmaschine 1 kann ein Sensor 15 angeordnet sein, durch den ein an der Anschlussvorrichtung 8 auftretendes Drehmoment und/oder eine auftretende Last bestimmt werden kann. Beispielsweise kann der Sensor 15 als eine Kraftmessdose ausgeführt sein, die an einem als Unterlenker oder als eine Zugdeichsel ausgebildeten Anschlussvorrichtung 8 angeordnet ist. Zusätzlich kann ein als Positionssensor ausgeführter Sensor 17 an der als Unterlenker oder als Zugdeichsel ausgebildeten Anschlussvorrichtung 8 angeordnet sein. Mittels des als Positionssensor ausgeführten Sensors 17 kann die Arbeitshöhe des Anbaugerätes 9 bestimmt werden.

An dem Anbaugerät 9 können ein oder mehrere Sensoren 17 angeordnet sein, durch welche die Bodeneindringtiefe der Grubberscharen 10 bestimmbar ist. Diese Sensoren 17 können als Potentiometer ausgeführt sein. Die als Potentiometer ausgeführten Sensoren 17 sind an den Aktoren 16 angeordnet, mittels der die Bodeneindringtiefe der Grubberscharen 10 eingestellt wird.

Des Weiteren kann an dem Anbaugerät 9 ein Sensor 17 vorgesehen sein, durch den die Höhenposition des Fahrwerk 14 bestimmbar ist. Die Höhenposition des Fahrwerk 14 lässt gleichfalls einen Rückschluss auf die Bodeneindringtiefe als ein Betriebsparameter des Anbaugerätes 9 zu.

Das Steuergerät 18 ist dazu eingerichtet, anhand der von dem oder den Sensoren 15 und 17 bereitgestellten Signalen den auftretenden Schlupf an den Bodeneingriffsmitteln 2, 3 und/oder die Zugkraft der Arbeitsmaschine 1 zu bestimmen. Diese Maschinenparameter der Arbeitsmaschine 1 werden durch die von dem Anbaugerät 9 auf die Arbeitsmaschine 1 ausgeübte Zugkraft sowie die Bodenverhältnisse des zu bearbeitenden Feldbodens beeinflusst.

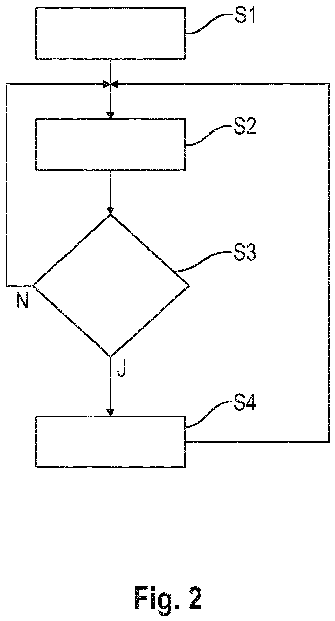

In Fig. 2 ist ein Ablaufdiagramm dargestellt, welches die wesentlichen Schritte des Verfahrens wiedergibt, mit welchem durch eine Veränderung mindestens eines Betriebsparameters des Anbaugerätes eine von dem Anbaugerät auf die Arbeitsmaschine ausgeübte Zugkraft in Abhängigkeit von mindestens einem Maschinenparameter der Arbeitsmaschine gesteuert- oder geregelt wird, dass mindestens der eine Maschinenparameter in einem vorgebbaren Bereich liegt.

In einem ersten Schritt S1 wird von dem Steuergerät 18 automatisiert oder mittels der Eingabe- und Ausgabevorrichtung 19 ein Sollwert oder Sollwertbereich für mindestens einen Maschinenparameter der Arbeitsmaschine 1 vorgegeben. Der Maschinenparameter der Arbeitsmaschine 1 kann der Schlupf, und/oder die Fahrgeschwindigkeit und/oder das Drehmoment sein.

Im zweiten Schritt S2 wird der aktuelle Istwert des mindestens einen Maschinenparameters bestimmt. Hierzu werden, wie weiter oben bereits ausgeführt, die von den Sensoren 15 und 17 bereitgestellten Signale verwendet und von dem Steuergerät 18 verarbeitet. Im Schritt S2 wird die von dem Anbaugerät 9 auf die Arbeitsmaschine 1 ausgeübte Zugkraft bestimmt, welche aus dem Widerstand des gezogen Anbaugerätes 9 und der bestehenden Bodenbeschaffenheit resultieren.

In einem dritten Schritt S3 wird der aktuelle Istwert des mindestens einen Maschinenparameters mit dem korrespondierenden Sollwert oder Sollwertbereich des Maschinenparameters verglichen. Wird keine Abweichung vom Sollwert oder dem Sollwertbereich festgestellt, wird vor den zweiten Schritt S2 zurückgesprungen. Wird eine Abweichung festgestellt, so wird zum nachfolgenden vierten Schritt übergegangen. In dem Schritt S3 kann eine Änderung der Bodenbeschaffenheit bestimmt werden. Diese Änderung kann zu einem erhöhten Schlupf führen, wenn die von dem Anbaugerät 9 auf die Arbeitsmaschine 1 ausgeübte Zugkraft zunimmt. Entsprechendes gilt für die Maschinenparameter Fahrgeschwindigkeit oder Drehmoment.

Im vierten Schritt S4 wird der mindestens eine Betriebsparameter des Anbaugerätes 9 automatisch angepasst, um den mindestens einen Maschinenparameter der Arbeitsmaschine 1 in dem im Schritt S1 vorgegeben Bereich, d.h. auf dem Sollwert oder innerhalb des Sollwertbereiches, zu halten. Anschließend wird vor den zweiten Schritt S2 zurückgesprungen und die Überwachung der Einhaltung des mindestens einen Maschinenparameters der Arbeitsmaschine 1 fortgeführt.

In dem Schritt S4 wird der Betriebsparameter Eindringtiefe des Anbaugerätes 9 angepasst, um den aktuell auftretenden Schlupf an den vorgegebenen Sollwert oder Sollwertbereich anzupassen. Wird das Erdreich des zu bearbeitenden Feldbodens weicher oder härter, wird diese Änderung durch die Sensoren an der Arbeitsmaschine 1 detektiert. Darauf steuert das Steuergerät 18 das Anbaugerät 9 und/oder die Anschlussvorrichtung 8 derart an, dass mindestens der eine Maschinenparameter in einem vorgebbaren Bereich liegt. Mit zunehmenden Widerstand durch das gezogene Anbaugerät 9 wird die Anschlussvorrichtung 8 und/oder das Anbaugerät 9 angesteuert, um die Bodeneindringtiefe in dem Maße zu verringern, dass ein übermäßiger Schlupf sowie ein Absinken der Fahrgeschwindigkeit vermieden werden. Nimmt der Widerstand aufgrund der sich ändernden Bodenbeschaffenheit ab, so wird die Anschlussvorrichtung 8 und/oder das Anbaugerät 9 angesteuert, um die Bodeneindringtiefe in dem Maße zu erhöhen, bis optimale Werte für die Traktion und die bereitgestellte Antriebsleistung des Arbeitsgerätes 1 erreicht werden bzw. den Vorgaben der Bedienperson entsprechen.

### Bezugszeichenliste

- 1: Arbeitsmaschine
- 2: Vorderrad
- 3: Hinterrad
- 4: Vorderachse
- 5: Hinterachse
- 6: Antriebsmotor
- 7: Getriebe
- 8: Anschlussvorrichtung
- 9: Anbaugerät
- 10: Grubberschar
- 11: Rahmen
- 12: Sternverteiler
- 13: Nachlaufwalze
- 14: Fahrwerk
- 15: Sensor
- 16: Aktor
- 17: Sensor
- 18: Steuergerät
- 19: Ein- und Ausgabevorrichtung
- 20: Bussystem

- S1: Erster Schritt
- S2: Zweiter Schritt
- S3: Dritter Schritt
- S4: Vierter Schritt

## Patentansprüche

1. Landwirtschaftliche Arbeitsmaschine (1) mit an zumindest einer angetriebenen Achse (4, 5) angeordneten Bodeneingriffsmitteln (2, 3) zur Übertragung eines Drehmoments sowie zumindest einer Anschlussvorrichtung (8), an welche ein von der Arbeitsmaschine (1) betriebenes Anbaugerät (9) angeschlossen ist, dessen Arbeitsposition höhenverstellbar ist, dass zumindest ein Sensor (15) zur Bestimmung des mindestens einen Maschinenparameters an der Arbeitsmaschine (1) angeordnet sowie dass der Arbeitsmaschine (1) zumindest ein Sensor (17) zur Bestimmung des mindestens einen Betriebsparameters des Anbaugerätes (9) zugeordnet ist und dass die Arbeitsmaschine (1) ein Steuergerät (18) zur Vorgabe des mindestens einen Maschinenparameters der Arbeitsmaschine (1) umfasst, wobei durch eine Veränderung mindestens eines Betriebsparameters des Anbaugerätes (9) eine von dem Anbaugerät (9) auf die Arbeitsmaschine (1) ausgeübte Zugkraft in Abhängigkeit von mindestens einem Maschinenparameter der Arbeitsmaschine (1) derart steuer- oder regelbar ist, wobei mindestens der eine Maschinenparameter in einem vorgebbaren Bereich liegt, **dadurch gekennzeichnet, dass** das Steuergerät (18) zur automatischen Vorgabe des mindestens einen Maschinenparameters der Arbeitsmaschine (1) eingerichtet ist, wobei in dem Steuergerät (18) hinterlegte georeferenzierte Daten zur Bestimmung eines Sollwertes des mindestens einen Maschinenparameters herangezogen werden, welche auf Informationen basieren, die bei einer vormaligen Bearbeitung des Feldbodens aufgezeichnet wurden.

2. Landwirtschaftliche Arbeitsmaschine (1) nach Anspruch 1, **dadurch gekennzeichnet, dass** die Steuerung oder Regelung des mindestens einen Betriebsparameters in Abhängigkeit von an den Bodeneingriffsmitteln (2, 3) der Arbeitsmaschine (1) auftretendem Schlupf erfolgt.

3. Landwirtschaftliche Arbeitsmaschine (1) nach Anspruch 1 oder 2, **dadurch gekennzeichnet, dass** die Steuerung oder Regelung des mindestens einen Betriebsparameters in Abhängigkeit von einem auf zumindest eines der Bodeneingriffsmittel (2, 3) übertragenen Drehmoment erfolgt.

4. Landwirtschaftliche Arbeitsmaschine (1) nach einem der Ansprüche 1 bis 3, **dadurch gekennzeichnet, dass** der mindestens eine Betriebsparameter des Anbaugerätes (9) eine Bodeneingriffstiefe ist.

5. Landwirtschaftliche Arbeitsmaschine (1) nach einem der vorangehenden Ansprüche, **dadurch gekennzeichnet, dass** zumindest ein Sensor (15) zur Bestimmung des auf zumindest eines der Bodeneingriffsmittel (2, 3) übertragenen Drehmomentes und/oder der auf die Arbeitsmaschine (1) ausgeübten Zugkraft an der Arbeitsmaschine (1) angeordnet ist.

6. Landwirtschaftliche Arbeitsmaschine (1) nach einem der vorangehenden Ansprüche, **dadurch gekennzeichnet, dass** der Arbeitsmaschine (1) zumindest ein Sensor (17) zur Bestimmung der Arbeitsposition des Anbaugerät (9) zugeordnet ist.

7. Landwirtschaftliche Arbeitsmaschine (1) nach einem der vorangehenden Ansprüche, **dadurch gekennzeichnet, dass** der mindestens eine Maschinenparameter der Arbeitsmaschine (1) die Traktion der Bodeneingriffsmittel (2, 3) und/oder die Antriebsleistung der Arbeitsmaschine (1) ist bzw. sind.

8. Landwirtschaftliche Arbeitsmaschine (1) nach einem der vorangehenden Ansprüche, **dadurch gekennzeichnet, dass** der mindestens eine Maschinenparameter der Arbeitsmaschine (1) die Fahrgeschwindigkeit ist.

9. Landwirtschaftliche Arbeitsmaschine (1) nach einem der vorangehenden Ansprüche, **dadurch gekennzeichnet, dass** das Steuergerät (18) zur manuellen Vorgabe des mindestens einen Maschinenparameters der Arbeitsmaschine (1) eingerichtet ist.

10. Verfahren zum Betreiben einer landwirtschaftlichen Arbeitsmaschine (1) mit an zumindest einer angetriebenen Achse (4, 5) angeordneten Bodeneingriffsmitteln (2, 3) zur Übertragung eines Drehmoments sowie zumindest einer Anschlussvorrichtung (8), an welche ein von der Arbeitsmaschine (1) betriebenes Anbaugerät (9) angeschlossen wird, dessen Arbeitsposition höhenverstellt wird, dass zumindest ein Sensor (15) zur Bestimmung des mindestens einen Maschinenparameters an der Arbeitsmaschine (1) angeordnet sowie dass der Arbeitsmaschine (1) zumindest ein Sensor (17) zur Bestimmung des mindestens einen Betriebsparameters des Anbaugerätes (9) zugeordnet ist und dass die Arbeitsmaschine (1) ein Steuergerät (18) zur Vorgabe des mindestens einen Maschinenparameters der Arbeitsmaschine (1) umfasst, wobei durch eine Veränderung mindestens eines Betriebsparameters des Anbaugerätes (9) eine von dem Anbaugerät (9) auf die Arbeitsmaschine (1) ausgeübte Zugkraft in Abhängigkeit von mindestens einem Maschinenparameter der Arbeitsmaschine (1) derart gesteuert- oder geregelt wird, dass mindestens der eine Maschinenparameter in einem vorgebbaren Bereich liegt, **dadurch gekennzeichnet, dass** das Steuergerät (18) zur automatischen Vorgabe des mindestens einen Maschinenparameters der Arbeitsmaschine (1) eingerichtet ist, wobei in dem Steuergerät (18) hinterlegte georeferenzierte Daten zur Bestimmung eines Sollwertes des mindestens einen Maschinenparameters herangezogen werden, welche auf Informationen basieren, die bei einer vormaligen Bearbeitung des Feldbodens aufgezeichnet wurden.

11. Verfahren nach Anspruch 10, **dadurch gekennzeichnet, dass** die von dem Anbaugerät (9) auf die Arbeitsmaschine (1) ausgeübte Zugkraft durch zumindest einen an der Arbeitsmaschine (1) angeordneten Sensor (15) bestimmt wird.

12. Verfahren nach Anspruch 10 oder 11, **dadurch gekennzeichnet, dass** die Anschlussvorrichtung (8) angesteuert wird, um eine Bodeneingriffstiefe des Anbaugerät (9) zu verändern, um mindestens den einen Maschinenparameter der Arbeitsmaschine (1) in dem vorgebbaren Bereich zu halten.

13. Verfahren nach einem der Ansprüche 10 bis 12, **dadurch gekennzeichnet, dass** die Art und der Typ des Anbaugerätes (9) berücksichtigt werden.

## Claims

1. An agricultural working machine (1) with ground engaging means (2, 3) disposed on at least one driven axle (4, 5) for transmission of a torque, as well as at least one connecting device (8) to which a mounted implement (9) the working position of which can be adjusted in height and which is operated by the working machine (1) is connected, wherein at least one sensor (15) is disposed on the working machine (1) for determining at least one machine parameter and also wherein at least one sensor (17) for determining at least one operating parameter of the mounted implement (9) is associated with the working machine (1) and wherein the working machine (1) comprises a control unit (18) for specifying the at least one machine parameter of the working machine (1), wherein, by means of a variation of at least one operating parameter of the mounted implement (9), a tractive force exerted on the working machine (1) by the mounted implement (9) can be controlled or regulated as a function of at least one machine parameter of the working machine (1) in a manner such that at least the one machine parameter lies in a range which can be specified, **characterized in that** the control unit (18) is configured for the automatic specification of the at least one machine parameter of the working machine (1), wherein georeferenced data stored in the control unit (18) are consulted in order to determine a nominal value for the at least one machine parameter, the data being based on information which was recorded during a previous treatment of the ground of the field.

2. The agricultural working machine (1) according to claim 1, **characterized in that** the control or regulation of the at least one operating parameter is carried out as a function of slippage occurring at the ground engaging means (2, 3) of the working machine (1).

3. The agricultural working machine (1) according to claim 1 or claim 2, **characterized in that** the control or regulation of the at least one operating parameter is carried out as a function of a torque transmitted to at least one of the ground engaging means (2, 3).

4. The agricultural working machine (1) according to one of claims 1 to 3, **characterized in that** the at least one operating parameter of the mounted implement (9) is a ground penetration depth.

5. The agricultural working machine (1) according to one of the preceding claims, **characterized in that** at least one sensor (15) is disposed on the working machine (1) for the determination of the torque transmitted to at least one of the ground engaging means (2, 3) and/or of the tractive force exerted on the working machine (1).

6. The agricultural working machine (1) according to one of the preceding claims, **characterized in that** at least one sensor (17) for determining the working position of the mounted implement (9) is associated with the working machine (1).

7. The agricultural working machine (1) according to one of the preceding claims, **characterized in that** the at least one machine parameter of the working machine (1) is or are the traction of the ground engaging means (2, 3) and/or the driving power of the working machine (1).

8. The agricultural working machine (1) according to one of the preceding claims, **characterized in that** the at least one machine parameter of the working machine (1) is the driving speed.

9. The agricultural working machine (1) according to one of the preceding claims, **characterized in that** the control unit (18) is configured for manual specification of the at least one machine parameter of the working machine (1).

10. A method for operating an agricultural working machine (1) with ground engaging means (2, 3) disposed on at least one driven axle (4, 5) for transmission of a torque as well as at least one connecting device (8) to which a mounted implement (9) the working position of which is adjusted in height and which is operated by the working machine (1) is connected, wherein at least one sensor (15) is disposed on the working machine (1) for determining at least one machine parameter and also wherein at least one sensor (17) for determining the at least one operating parameter of the mounted implement (9) is associated with the working machine (1) and wherein the working machine (1) comprises a control unit (18) for specifying the at least one machine parameter of the working machine (1), wherein, by means of a variation of at least one operating parameter of the mounted implement (9), a tractive force exerted on the working machine (1) by the mounted implement (9) is controlled or regulated as a function of at least one machine parameter of the working machine (1) in a manner such that at least the one machine parameter lies in a range which can be specified, **characterized in that** the control unit (18) is configured for the automatic specification of the at least one machine parameter of the working machine (1), wherein georeferenced data stored in the control unit (18) are consulted in order to determine a nominal value for the at least one machine parameter, the data being based on information which was recorded during a previous treatment of the ground of the field.

11. The method according to claim 10, **characterized in that** the tractive force exerted on the working machine (1) by the mounted implement (9) is determined by means of at least one sensor (15) disposed on the working machine (1).

12. The method according to claim 10 or claim 11, **characterized in that** the connecting device (9) is controlled in order to vary a ground penetration depth of the mounted implement (9) in order to keep at least the one machine parameter of the working machine (1) in the specified range.

13. The method according to one of claims 10 to 12, **characterized in that** the kind and type of mounted implement (9) is taken into consideration.

## Revendications

1. Machine de travail agricole (1) comprenant des moyens de prise au sol (2, 3) disposés sur au moins un essieu moteur (4, 5) pour transmettre un moment de rotation ainsi que comprenant au moins un dispositif de liaison (8) au niveau duquel peut être relié un outil rapporté (9) qui est entraîné par la machine de travail (1) et dont la position de travail est réglable en hauteur, en ce qu'au moins un capteur (15) est disposé pour déterminer le au moins un paramètre machine sur la machine de travail (1) ainsi qu'en ce qu'à la machine de travail (1) est associé au moins un capteur (17) pour déterminer le au moins un paramètre de fonctionnement de l'outil rapporté (9), et en ce que la machine de travail (1) inclut un appareil de commande (18) pour prescrire le au moins un paramètre machine de la machine de travail (1), une force de traction exercée sur la machine de travail (1) par l'outil rapporté (9) pouvant ainsi être commandée ou régulée en fonction d'au moins un paramètre machine de la machine de travail (1) en modifiant au moins un paramètre de fonctionnement de l'outil rapporté (9), au moins le un paramètre machine se trouvant dans une plage prescriptible, **caractérisée en ce que** l'appareil de commande (18) est agencé pour prescrire automatiquement le au moins un paramètre machine de la machine de travail (1), des données géoréférencées enregistrées dans l'appareil de commande (18) étant consultées pour déterminer une valeur de consigne du au moins un paramètre machine, lesquelles reposent sur des informations qui ont été enregistrées lors d'un travail antérieur du sol du champ.

2. Machine de travail agricole (1) selon la revendication 1, **caractérisée en ce que** la commande ou la régulation du au moins un paramètre de fonctionnement s'effectue en fonction de patinage survenant au niveau des moyens de prise au sol (2, 3) de la machine de travail (1).

3. Machine de travail agricole (1) selon la revendication 1 ou 2, **caractérisée en ce que** la commande ou la régulation du au moins un paramètre de fonctionnement s'effectue en fonction d'un moment de rotation transmis à au moins un des moyens de prise au sol (2, 3).

4. Machine de travail agricole (1) selon une des revendications 1 à 3, **caractérisée en ce que** le au moins un paramètre de fonctionnement de l'outil rapporté (9) est une profondeur de pénétration dans le sol.

5. Machine de travail agricole (1) selon une des revendications précédentes, **caractérisée en ce qu'**au moins un capteur (15) est disposé sur la machine de travail (1) pour déterminer le moment de rotation transmis à au moins un des moyens de prise au sol (2, 3) et/ou la force de traction exercée sur la machine de travail (1).

6. Machine de travail agricole (1) selon une des revendications précédentes, **caractérisée en ce qu'**à la machine de travail (1) est associé au moins un capteur (17) pour déterminer la position de travail de l'outil rapporté (9).

7. Machine de travail agricole (1) selon une des revendications précédentes, **caractérisée en ce que** le au moins un paramètre machine de la machine de travail (1) est, respectivement sont la traction des moyens de prise au sol (2, 3) et/ou la puissance d'entraînement de la machine de travail (1).

8. Machine de travail agricole (1) selon une des revendications précédentes, **caractérisée en ce que** le au moins un paramètre machine de la machine de travail (1) est la vitesse de marche.

9. Machine de travail agricole (1) selon une des revendications précédentes, **caractérisée en ce que** l'appareil de commande (18) est agencé pour une prescription manuelle du au moins un paramètre machine de la machine de travail (1).

10. Procédé de fonctionnement d'une machine de travail agricole (1) comprenant des moyens de prise au sol (2, 3) disposés sur au moins un essieu moteur (4, 5) pour transmettre un moment de rotation ainsi que comprenant au moins un dispositif de liaison (8) au niveau duquel peut être relié un outil rapporté (9) qui est entraîné par la machine de travail (1) et dont la position de travail est réglable en hauteur, en ce qu'au moins un capteur (15) est disposé pour déterminer le au moins un paramètre machine sur la machine de travail (1) ainsi qu'en ce qu'à la machine de travail (1) est associé au moins un capteur (17) pour déterminer le au moins un paramètre de fonctionnement de l'outil rapporté (9), et en ce que la machine de travail (1) inclut un appareil de commande (18) pour prescrire le au moins un paramètre machine de la machine de travail (1), une force de traction exercée sur la machine de travail (1) par l'outil rapporté (9) pouvant ainsi être commandée ou régulée en fonction d'au moins un paramètre machine de la machine de travail (1) en modifiant au moins un paramètre de fonctionnement de l'outil rapporté (9), au moins le un paramètre machine se trouvant dans une plage prescrite, **caractérisée en ce que** l'appareil de commande (18) est agencé pour prescrire automatiquement le au moins un paramètre machine de la machine de travail (1), des données géoréférencées enregistrées dans l'appareil de commande (18) étant consultées pour déterminer une valeur de consigne du au moins un paramètre machine, lesquelles reposent sur des informations qui ont été enregistrées lors d'un travail antérieur du sol du champ.

11. Procédé selon la revendication 10, **caractérisé en ce que** la force de traction exercée par l'outil rapporté (9) sur la machine de travail (1) est déterminée par l'intermédiaire d'au moins un capteur (15) disposé sur la machine de travail (1) .

12. Procédé selon la revendication 10 ou 11, **caractérisé en ce que** le dispositif de liaison (8) est commandé pour modifier une profondeur de pénétration dans le sol de l'outil rapporté (9) afin de maintenir le un paramètre machine de la machine de travail (1) dans la plage prescriptible.

13. Procédé selon une des revendications 10 à 12, **caractérisé en ce que** la nature et le type de l'outil rapporté (9) sont pris en compte.
